# EUROPÄISCHE PATENTSCHRIFT

(11) **EP 3 106 899 B1**
(45) Veröffentlichungstag und Bekanntmachung des Hinweises auf die Patenterteilung: **18.09.2019**
(21) Anmeldenummer: 15172394.7
(22) Anmeldetag: 16.06.2015
(51) Int. Cl.: G01S 19/41, G05D 1/02, E01C 19/00, E02F 3/00, E02F 3/84, E02F 9/20, E02F 9/22, E02F 9/26, G01S 19/25, G01S 19/45

(54) **REFERENZIERTES FAHRZEUGSTEUERSYSTEM**
REFERENCED VEHICLE CONTROL SYSTEM
SYSTEME DE COMMANDE DE VEHICULE REFERENCE

(43) Veröffentlichungstag der Anmeldung: 21.12.2016
(73) Patentinhaber: Leica Geosystems AG, 9435 Heerbrugg (CH)
(72) Erfinder: MAZUR, Chris, West Des Moines, Iowa 50265 (US); BAKKER, Adriaan, NL-1689 EG Zwaag (NL); KURZ, Alexander, A-6845 Hohenems (AT)
(74) Vertreter: Kaminski Harmann

(56) Entgegenhaltungen:
- EP-A1- 2 006 448
- WO-A1-2006/092441
- WO-A1-2009/055955
- WO-A1-2012/168186

## Beschreibung

Die Erfindung betrifft ein Fahrzeugsteuersystem nach dem Oberbegriff des Anspruches 1.

Das erfindungsgemässe Fahrzeugsteuersystem ist vorgesehen für Transport- und Baumaschinen, insbesondere Erdbau- oder Verkehrswegebaumaschinen. Derartige Maschinen werden beispielsweise für den Strassenbau eingesetzt, im Speziellen zur Fertigung von Wasserrinnen, Grenzwällen, Bordsteinen oder Strassenbelägen. Auch abtragende und umformende Maschinen wie Planierraupen, Bagger, Bodenfräsen und Walzen, oder Transportmaschinen wie Beschicker und Fahrmischer sind dazu prädestiniert, mit dem erfindungsgemässen Fahrzeugsteuersystem ausgerüstet zu werden.

Bei Fahrzeugsteuersystemen mit den genannten Anwendungen ist vor allem Präzision in der Positionierung der Maschine gefragt. In Abhängigkeit von ermittelten Ist-Positionsdaten wird das Fahrzeug gemäss einem vorgegebenen Weg geführt.

Um die Maschine entlang eines vorgegebenen Weges zu führen und gegebenenfalls auch ihre Werkzeuge vertikal zu positionieren, ist es unter anderem gängig, eine Referenzlinie - z.B. ein Drahtseil - zu spannen, entlang welcher eine Führung erfolgt. Diese wird mit Abstandsfühlern verwirklicht, die mit dem Steuerungssystem der Maschine verknüpft sind.

Da die Referenzlinien-Abtastung ein Ausmessen und Abstecken der zu bearbeitenden Fläche vor Beginn der Einbauarbeiten erfordert und damit sehr aufwendig ist, kann die Maschine alternativ über ein Positionsbestimmungssystem gesteuert werden. Beispielsweise wird die Position der Maschine über ein oder mehrere auf ihr angeordnete GPS-Empfänger bestimmt. Die von Navigations-Satelliten empfangenen Positionsdaten sind dann allerdings mit einem Fehler bzw. einer Ungenauigkeit behaftet, welche je nach Anwendung nicht akzeptabel sind. Die Genauigkeit wird üblicherweise dadurch stark verbessert, dass ein so genanntes Differential Global Positioning System (DGPS) zur Anwendung kommt. Dieses nutzt den Umstand aus, dass die in der näheren Umgebung zu einem bestimmten Zeitpunkt auftretenden Fehler bei der Positionsbestimmung nahezu übereinstimmen. Die GPS-Empfänger der Maschine erhalten also Korrekturdaten, welche an einer anderen, nicht zu fern gelegenen Stelle durch eine Referenzstation gewonnen werden. Die Referenzstation ist dabei ein weiterer GPS-Empfänger und die Stelle ein Standort, dessen Lage exakt bekannt ist. Die von der Referenzstation empfangenen Positionsdaten werden mit der exakt bekannten Position abgeglichen und daraus eine Differenz bestimmt, die den ungenauen GPS-Empfängern mitgeteilt wird. Diese Technologie ist gattungsgemäss etwa in der US 8,400,351 und der DE 10 2009 059 106 A1 beschrieben, und erfordert nicht nur aufwändiges, teures Equipment sondern auch Spezialwissen von Fachkräften.

Ebenfalls bekannt ist eine satellitenunabhängige Alternative der Maschinenpositionierung, wie in der EP 2 006 448 A1 benannt, bei welcher die Ist-Position eines auf dem Fahrzeug angebrachten Reflektors, dessen Position mittels eines Tachymeters fortlaufend gemessen wird, mit einer Soll-Position z.B. aus einem Geländemodell verglichen wird, wobei aus dem Vergleich Steueranweisungen abgeleitet werden. Nachteilig bei dieser Methode sind die andauernde Abhängigkeit der Steuerung von dem feststehenden Tachymeter und ein Nachverfolgungsmechanismus (tracking), der potentiell störungsanfällig ist.

Aus der WO2006/092441 A1 ist ein Gleitschalungsfertiger bekannt, der mit Informationen von Tachymetern und Neigungssensoren eine Berechnung von vier Punkten am Fertiger ermöglicht, anhand dessen er automatisch durch Vergleich der gemessenen Ist-Positionen mit den gewünschten Soll-Positionen der Punkte in Position und Orientierung steuerbar ist.

Die genannten Positions- oder Lagebestimmungsverfahren zur Steuerung sind für hohe Genauigkeiten entwickelt und benötigen dementsprechend komplexe Komponenten und Datenverarbeitungsmethoden. Daher werden nur die mit höchster Genauigkeit arbeitenden Maschinen derart gesteuert.

Aufgabe der Erfindung ist daher die Bereitstellung eines vereinfachten und daher anwender-freundlicheren Fahrzeugsteuersystems.

Eine weitere Aufgabe der Erfindung ist die Bereitstellung eines Fahrzeugsteuersystems mit einer simplifizierten Referenzierung.

Diese Aufgabe wird durch die Verwirklichung der Merkmale der unabhängigen Ansprüche gelöst. Merkmale, die die Erfindung in alternativer oder vorteilhafter Weise weiterbilden, sind den abhängigen Patentansprüchen zu entnehmen.

Gegenstand der Erfindung ist ein Fahrzeugsteuersystem, welches zur Navigation GNSS-Signale (z.B. GPS-Signale oder Glonass-Signale) verwendet, dabei aber ohne GNSS-Referenzstation, sowie ohne GNSS-Lokalisierung bzw. GNSS-Koordinatensystem auskommt und dennoch eine zumindest gleichwertige Genauigkeit bietet wie ein Steuersystem mit GNSS-Referenzstation. Infolgedessen ist auch weder eine aufwändige GNSS-Transformation nötig, noch der Einsatz von Fachkräften mit GNSS-Know-How. Diese Vereinfachung trägt dazu bei, dass auf Baustellen Zeit und Kosten eingespart werden.

Erfindungsgemäss weist das Fahrzeugsteuersystem zwei in bekannter Relation zueinander und fix auf einem Fahrzeug positionierte GNSS-Empfänger zum Empfang von Signalen von Navigationssatelliten, eine Rechnereinheit (4) zum Verwerten der Signale zur Bildung von Richtungsvektoren und Erzeugen von Befehlen für die Lenkung des Fahrzeugs in Abhängigkeit der Richtungsvektoren, wobei:
- wenigstens ein Retroreflektor in vorgegebener Positionierung zu den GNSS-Empfängern auf dem Fahrzeug angeordnet ist,
- ein geodätisches Vermessungsgerät an einer bekannten Referenz-Position zur Bestimmung von exakten Absolutpositionen des Retroreflektors ortsfest positioniert ist, wobei das Vermessungsgerät einen Sender aufweist zur Übermittlung der exakten Absolutpositionen an einen Empfänger der Rechnereinheit, und
- die Rechnereinheit ausgebildet ist zum Erzeugen der Befehle weiter in Abhängigkeit der exakten Absolutpositionen.

An einem Standort (z.B. am Rande einer Baustelle) mit genau bekannten Koordinaten (z.B. GPS-Koordinaten) dient ein Tachymeter, ein Lasertracker oder eine Totalstation als Referenzstation. Dieses geodätische Vermessungsgerät weist Mittel auf zur Übertragung von Positionsdaten, dies beispielsweise über Funk.

Ein Baufahrzeug weist mindestens einen Reflektor und zwei GNSS-Empfänger (z.B. GPS-Antennen in einer Master/Slave-Anordnung) auf, wobei die räumlichen Positionen besagter Komponenten relativ zueinander sowie relativ zu dem Fahrzeug exakt bekannt sind. Beispielsweise können auf dem Baufahrzeug auch mehrere Reflektoren montiert sein, dies für den Fall, dass perspektivisch bedingt stets zumindest ein Reflektor für das geodätische Vermessungsgerät sichtbar ist, wobei die unterschiedlichen Positionen der Reflektoren auf dem Baufahrzeug ebenfalls bekannt und die Reflektoren diesbezüglich identifizierbar sein müssen.

Die GPS-Antennen dienen hierbei zur Bestimmung der Fahrtwinkel bzw. -vektoren, anhand welcher die Fahrtrichtung bzw. Ausrichtung des Fahrzeugs bestimmt wird. Dies geschieht durch direkte und kombinierte Auswertung in einer Rechnereinheit, welche sich auf dem Fahrzeug befindet, aber auch mit Hilfe von drahtlosem Datenaustausch abseits stationiert sein kann. Die Rechnereinheit kann funktionell bedingt auch in zwei Einheiten aufgetrennt sein, namentlich eines GPS-Receivers und eines Computers zur Berechnung der Daten.

Die Referenzierung bzw. Absolutpositions-Stützung durch die besagte TPS-Referenzstation (z.B. Totalstation) findet mindestens initial und einmalig, insbesondere fortlaufend im etwaigen Abtastbereich von zwischen 5 und 10 mal pro Sekunde statt, dies im übertragenen Sinne als "Stützvektor" für die GNSS-Richtungsvektoren, oder in anderen Worten: um für die GNSS-Antennen eine hochpräzise Absolutpositionierung zu liefern.

Je nach dem, wie die beiden GPS-Antennen auf dem Fahrzeug ausgerichtet sind, ist aus den Höhen- und Lageinformationen der Antennen eine Neigung bzw. Steigung errechenbar. Sollte beispielsweise die Querneigung von Interesse sein (z.B. wichtig beim Strassenbau in einer Kurve), so liegen die Antennen bevorzugt in einer Linie senkrecht zur (frontalen) Fahrtrichtung bzw. parallel zu einer der Fahrzeugachsen.

Gemäss einer weiteren Ausführungsform der Erfindung kann eine referenzierte Reflektor- bzw. Fahrzeugposition anschliessend selbst als Referenz bzw. das den Reflektor aufweisende Fahrzeug als Referenzstation dienen, indem die Positionsstützdaten, insbesondere fortlaufend, an andere Maschinen weitergeleitet werden (z.B. per Funktechnologie). Eine Totalstation bzw. ein Tachymeter kann auf einer Baustelle, falls auf einer exakt bekannten Stelle stehend, für alle zu referenzierende Fahrzeuge zur Verfügung stehen. Jedoch kann es praktisch sein, die Positionsstützdaten, ggf. in einem von den Fahrzeugen gesponnenen Netzwerk, weiterzugeben, anstatt jedes einzelne Fahrzeug zu referenzieren.

Auch können die GNSS-Stützwerte durch eben solche TPS-Technologien von Fahrzeug zu Fahrzeug übertragen werden, d.h. per Totalstation/Tracker und Reflektor, wobei die Raumpositionen dieser beiden Komponenten relativ zu den sie tragenden Fahrzeugen bekannt sind, und insbesondere auch die per GNSS-System ermittelten Ausrichtungen der Fahrzeuge in die Berechnung einbezogen wird. Voraussetzung hierbei ist, dass die Fahrzeuge das erfindungsgemässe Doppel-GNSS-Antennen-Ortungssystem zur (Aus-)Richtungsbestimmung aufweisen.

Der Empfänger der Rechnereinheit kann zur Weiterleitung von Korrekturdaten an Empfänger anderer Fahrzeuge ausgebildet sein, wobei die Korrekturdaten gebildet werden aus der Differenz zwischen mit den GNNS-Empfängern ermittelten Positionsdaten und den exakten Absolutpositionen, welche über das geodätische Vermessungsgerät, wie beispielsweise eine Totalstation oder ein Tachymeter, und dem Retroreflektor ermittelt wurden.

Die Rechnereinheit kann zusätzlich ausgebildet sein zur Erzeugung von Befehlen für die Positionierung und/oder Zustellung eines am Fahrzeug angebrachten Werkzeuges, wie etwa eines Fräswerkes. Auch kann die Rechnereinheit dazu ausgebildet sein, Befehle für die Positionierung und/oder Zustellung eines am Fahrzeug angebrachten Materialzubringers zu erzeugen, etwa für eine Strassendecke.

Die Rechnereinheit kann weiterhin ausgebildet sein zur Erzeugung von Befehlen für den Antrieb des Fahrzeuges, und damit etwa für die Geschwindigkeit und/oder Beschleunigung des Fahrzeuges. Auch kann analog das Bremssystem durch die Rechnereinheit gesteuert werden.

Die Bestimmung und Übermittlung der exakten Absolutpositionen durch die Rechnereinheit kann fortlaufend erfolgen.

Die GNSS-Empfänger sind beispielsweise gemeinsam auf einer Geraden positioniert, welche parallel oder senkrecht zur Geradeausfahrtrichtung oder zur Fahrzeugachse ist.

Wenn das Fahrzeug mindestens ein Werkzeug und/oder einen Materialzubringer aufweist, dann sind auf einem Datenträger der Rechnereinheit mindestens ein oder mehrere aus der folgenden Auflistung gespeichert: mindestens ein Ist-2D-Modell, mindestens ein Ist-3D-Modell, mindestens ein Soll-3D-Modell, mindestens ein Zwischen-Soll-3D-Modell, und Arbeitsanweisungen bezüglich einer Bodengestaltung. Diese Modelle können dem Fahrer der Maschine z.B. in der Fahrgastzelle auf einem mit der Rechnereinheit verbundenen Display angezeigt werden. Das 2D-Modell kann dem Benutzer des Fahrzeugs als Landkarte einen Überblick bieten, indem es seinen Standort auf dem Baustellengelände anzeigt. 3D-Modelle können im Ist- und im Soll-Zustand darstellbar sein. Insbesondere können Zwischen-Soll-3D-Modelle angezeigt werden, wenn beispielsweise mehrere Arbeitsschritte verrichtet werden müssen. Auch können unmittelbare Arbeitsanweisungen über das mit der Rechnereinheit verbundene Display für den Facharbeiter erfolgen. Das mindestens eine Modell enthält bevorzugt geometrische Daten in GNSS-Koordinaten.

Die Erfindung betrifft auch ein entsprechendes Verfahren zur mindestens teilweise automatisierten Steuerung eines Fahrzeuges, insbesondere einer Baumaschine, in welchem zwei in bekannter Relation zueinander und fix auf dem Fahrzeug positionierte GNSS-Empfänger Signale von Navigationssatelliten empfangen, eine Rechnereinheit die Signale fortlaufend zu Richtungsvektoren verwertet, ein an einer bekannten Referenz-Position ortsfestes geodätisches Vermessungsgerät exakte Absolutpositionen eines auf dem Fahrzeug in bekannter Relation zu den GNSS-Empfängern positionierten Retroreflektors bestimmt, ein Sender des Vermessungsgerätes die exakten Absolutpositionen an die Rechnereinheit übermittelt, und die Rechnereinheit in Abhängigkeit der Richtungsvektoren und der exakten Absolutpositionen Befehle für die Lenkung des Fahrzeugs erzeugt.

Auf zusätzlichen Fahrzeugen anwendbar und montierbar ist ein erfindungsgemässes Erweiterungssystem, welches mindestens aufweist: zwei in bekannter Relation zueinander und fix auf einem besagten zusätzlichen Fahrzeug positionierte GNSS-Empfänger zum Empfang von Signalen von Navigationssatelliten, einen Empfänger zum Empfang von Korrekturdaten, und eine Rechnereinheit zum Verwerten der Signale zur Bildung von Richtungsvektoren und Positionsdaten und zum Erzeugen von Befehlen an die Lenkung des Fahrzeugs in Abhängigkeit der Richtungsvektoren, der Positionsdaten und der Korrekturdaten.

Auch betrifft die Erfindung die Verwendung zweier in bekannter Relation zueinander und fix auf einem Fahrzeug positionierte GNSS-Empfänger zum Empfang von Signalen von Navigationssatelliten, einem Empfänger zum Empfang von Korrekturdaten, und eine Rechnereinheit zum Verwerten der Signale zur Bildung von Richtungsvektoren und Positionsdaten und zum Erzeugen von Befehlen an die Lenkung des Fahrzeugs in Abhängigkeit der Richtungsvektoren, der Positionsdaten und der Korrekturdaten, als auf einem zusätzlichen Fahrzeug anwendbaren und montierbaren Erweiterungssystem für das zuvor beschriebene Fahrzeugsteuersystem.

Die erfindungsgemässen Vorrichtungen und das erfindungsgemässe Verfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen
- Fig. 1:: eine Strassenbaumaschine mit Reflektor, zwei GNSS-Antennen und Rechnereinheit;
- Fig. 2:: ein Baustellen-Szenario mit verschiedenen erfindungsgemässen Baumaschinen;

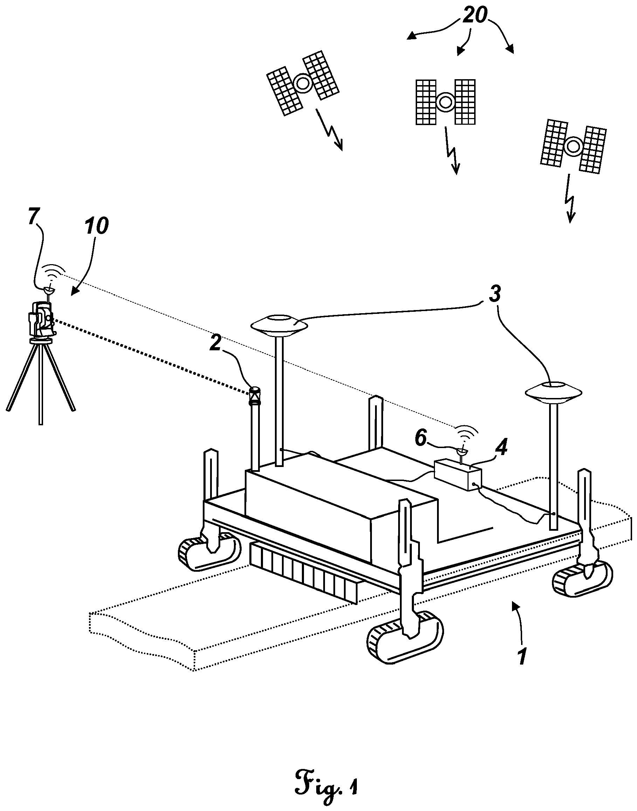

Figur 1 zeigt eine Szenerie aus dem Strassenbau, insbesondere einen Gleitschalungsfertiger 1, welcher anhand einer Totalstation 10 vor Beginn der Arbeit referenziert wird. Die Totalstation 10 ist dabei hochgenau auf einem Standort von bekannter Lage, insbesondere mit bekannten GPS-Koordinaten, aufgestellt. Ausgehend von dieser bekannten Lage lässt sich hochpräzise die Raumposition des Retroreflektors 2 bestimmen, welcher an einer beliebigen Stelle an dem Strassenfertiger 1, beispielsweise am Ende eines Mastes, angebracht ist. In vordefinierter räumlicher Korrelation zum Retroreflektor 2 befinden sich zwei GNSS-Antennen 3, beispielsweise GPS-Antennen, auf der Maschine 1, welche Signale von Navigations-Satelliten 20 empfangen. Die mit den GPS-Antennen 3 verbundene Rechnereinheit 4 verfügt über
- Informationen zur absoluten räumlichen Lage der Totalstation 10,
- Informationen zur räumlichen Lage der GPS-Antennen 3 zu einander sowie relativ zum Fahrzeug 1,
- Informationen zur räumlichen Lage des Retroreflektors 2 relativ zum Fahrzeug 1, und
- Mittel zum Empfang von Informationen von der Totalstation 10.

Die Totalstation 10 verfügt entsprechend über Mittel zum Senden von Informationen an die Rechnereinheit 4. Die Informationen betreffen insbesondere die von der Totalstation 10 ermittelten hochpräzisen Raumkoordinaten des Retroreflektors 2, diese ausgehend vom bzw. basierend auf der exakt bekannten Lage der Totalstation 10. Dass die Rechnereinheit 4 über Informationen zur absoluten räumlichen Lage der Totalstation 10 verfügt, ist genau dann optional, wenn die Rechnereinheit 4 keine relativen, sondern absolute Daten hinsichtlich der Lage des Retroreflektors 2 von der Totalstation 10 (Ursprung) empfängt. Entweder wird der Rechnereinheit 4 also die absolute Lage des Retroreflektors 2 mitgeteilt, oder sie muss diese erst aus den abgespeicherten Informationen zur absoluten räumlichen Lage der Totalstation 10 und der von der Totalstation 10 gemessenen Lage des Retroreflektors 2 relativ zur Totalstation 10 errechnen.

Weiters empfängt die Rechnereinheit 4 Rohdaten (Signale) aus den GPS-Antennen 3 und verarbeitet diese zu Ausrichtungsdaten (Winkel bzw. Vektoren).

Das fortlaufende Tracken des Reflektors 2 ermöglicht die unmittelbare Absolutpositions-Bestimmung des Fahrzeugsteuerungssystems, wobei das GNSS-System (bestehend mindestens aus den beiden Antennen und der Rechnereinheit) fortlaufend Ausrichtungsdaten liefert.

Alternativ kann über die Totalstation 10 auch eine initiale und einmalige Einmessung bzw. Referenzierung stattfinden, wobei dann - anstelle der fortlaufenden Absolut-Referenzierung - über die GNSS-Antennen gewonnene Positionsdaten den Positionsverlauf weiterführen. Diese Positionsdaten werden dann anhand der Referenzierung einmalig präzisiert.

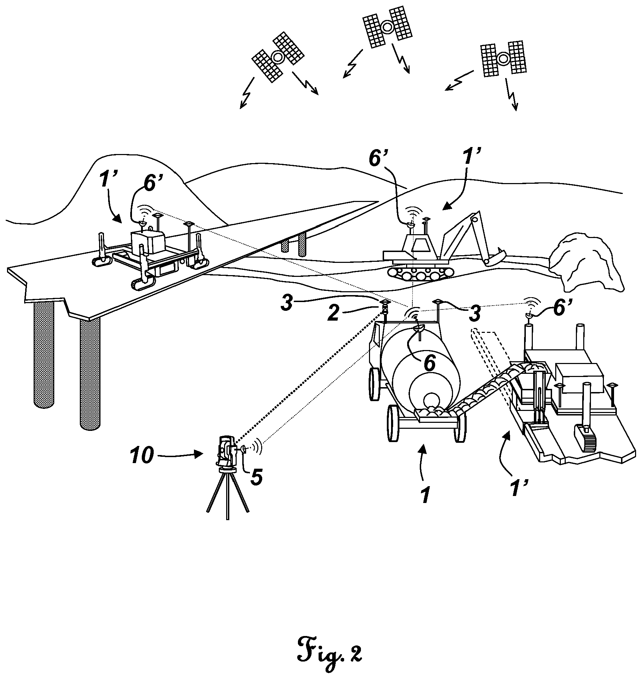

Figur 2 zeigt ein Baustellenszenario mit mehreren verschiedenen Baumaschinen 1, 1' . Das Fahrzeug 1, welches das erfindungsgemässe Steuerungssystem aufweist, kann über die Totalstation 10 in der beschriebenen Weise seine Absolutposition referenzieren. Die Fahrzeuge 1', welche keinen Retroreflektor 2 aufweisen, können dennoch über eine Kommunikationsanlage (Stützpositionsdaten-Sender 5, Empfänger 6, wobei Empfänger 6 auch als Sender von Korrekturdaten dient, und Empfänger 6') oder sonstige kabellose Übertragung Korrekturwerte erhalten, dies im gezeigten Beispiel durch Maschine 1, welche diese Korrekturdaten über
- die exakte Absolutposition und
- durch die auf ihr positionierten GNSS-Antennen 3 ermittelte "grobe" (mit GNSS-Fehler behaftete) Absolutposition
errechnet. Die Rechnereinheiten 4 der Maschinen sind in der Figur 2 nicht dargestellt.

Voraussetzung für dieses Ausführungsbeispiel der Erfindung ist, dass über das GNSS-Antennensystem auf den Maschinen 1 und 1' zusätzlich zu den Richtungsvektoren auch eine (unreferenzierte) GNSS-Position ermittelt wird. Mit anderen Worten wird auf der Maschine 1 (anhand einer Rechnereinheit 4) eine Korrektur (Positionsdifferenz) gebildet aus:
- der durch die Totalstation 10 ermittelten (exakten) Absolutposition des Reflektors 2 und
- der durch die GNSS-Antennen 3 der Maschine 1 ermittelten (ungenauen) Position.

Die Kommunikationsanlage (6, 6') tauscht dann nur besagte GNSS-Korrektur aus, mit welcher die Maschinen 1' ohne TPS-Referenzierung ebenfalls automatisch gesteuert werden können.

Alternativ können die Baumaschinen auch Messsysteme aufweisen, über welche die Positionen der Baumaschinen relativ zueinander ermittelt werden. Dadurch muss über die GNSS-Antennen keine (ungenaue) Position mehr ermittelt werden, sondern es wird lediglich die (mit dem geodätischen Vermessungsgerät exakt bestimmte) Absolutposition der Maschine 1 mit allen weiteren Maschinen 1' ausgetauscht.

Es versteht sich, dass die gezeigten und erklärten Figuren nur mögliche Ausführungsbeispiele schematisch darstellen. Insbesondere wird darauf hingewiesen, dass die explizit dargestellten und erklärten Beispiele ausnahmslos sowohl separat voneinander als auch in jeglicher Kombination miteinander einsetzbar sowie auch mit entsprechenden Vorrichtungen und Verfahren des Stands der Technik kombinierbar sind.

## Patentansprüche

1. Fahrzeugsteuersystem, insbesondere vorgesehen zur Verwendung auf Baumaschinen, mindestens aufweisend:
• wenigstens einen auf einem Fahrzeug (1) angeordneten Retroreflektor (2),
• ein an einer bekannten Referenz-Position ortsfest positioniertes geodätisches Vermessungsgerät (10) zur Bestimmung von exakten Absolutpositionen des Retroreflektors (2), und
• eine Rechnereinheit (4) zum Erzeugen von Befehlen für die Lenkung des Fahrzeugs in Abhängigkeit der exakten Absolutpositionen, wobei das Vermessungsgerät (10) einen Sender (5) aufweist zur Übermittlung der exakten Absolutpositionen an einen Empfänger (6) der Rechnereinheit (4),
**dadurch gekennzeichnet, dass**
• zwei GNSS-Empfänger (3) zum Empfang von Signalen von Navigationssatelliten (20) in bekannter Relation zueinander und fix auf dem Fahrzeug (1) positioniert sind, wobei der Retroreflektor (2) in vorgegebener Positionierung zu den GNSS-Empfängern (3) auf dem Fahrzeug (1) angeordnet ist, und
• die Rechnereinheit (4) ausgebildet ist zum Verwerten der Signale zur Bildung von Richtungsvektoren und Erzeugen der Befehle weiter in Abhängigkeit der Richtungsvektoren.

2. Fahrzeugsteuersystem nach einem der vorherigen Ansprüche,
wobei der Empfänger (6) der Rechnereinheit (4) zur Weiterleitung von Korrekturdaten an Empfänger (6') anderer Fahrzeuge ausgebildet ist, wobei die Korrekturdaten gebildet werden aus der Differenz zwischen
• mit den GNNS-Empfängern (3) ermittelten Positionsdaten und
• den exakten Absolutpositionen.

3. Fahrzeugsteuersystem nach einem der vorherigen Ansprüche,
wobei die Rechnereinheit (4) ausgebildet ist zur Erzeugung von Befehlen für die Positionierung und/oder Zustellung eines am Fahrzeug (1) angebrachten Werkzeuges.

4. Fahrzeugsteuersystem nach einem der vorherigen Ansprüche, wobei die Rechnereinheit (4) ausgebildet ist zur Erzeugung von Befehlen für die Positionierung und/oder Zustellung eines am Fahrzeug (1) angebrachten Materialzubringers.

5. Fahrzeugsteuersystem nach einem der vorherigen Ansprüche, wobei die Rechnereinheit (4) ausgebildet ist zur Erzeugung von Befehlen für den Antrieb des Fahrzeuges (1).

6. Fahrzeugsteuersystem nach einem der vorherigen Ansprüche, wobei die Rechnereinheit (4) ausgebildet ist zur Erzeugung von Befehlen für das Bremssystem des Fahrzeuges (1).

7. Fahrzeugsteuersystem nach einem der vorherigen Ansprüche, wobei das geodätische Vermessungsgerät (10) zur fortlaufenden Bestimmung und Übermittlung der exakten Absolutpositionen ausgebildet ist.

8. Fahrzeugsteuersystem nach einem der vorherigen Ansprüche, wobei die GNSS-Empfänger (3) gemeinsam auf einer Geraden positioniert sind, welche
• parallel zur Geradeausfahrtrichtung oder
• senkrecht zur Geradeausfahrtrichtung ist.

9. Fahrzeugsteuersystem nach einem der Ansprüche 1 bis 7,
wobei die GNSS-Empfänger (3) gemeinsam auf einer Geraden positioniert sind, welche
• parallel zu einer Fahrzeugachse oder
• senkrecht zu einer Fahrzeugachse ist.

10. Fahrzeugsteuersystem nach einem der vorherigen Ansprüche, wobei das Fahrzeug mindestens ein Werkzeug und/oder einen Materialzubringer aufweist,
wobei in der Rechnereinheit (4) ein oder mehrere aus der folgenden Gruppe gespeichert sind:
• mindestens ein Ist-2D-Modell,
• mindestens ein Ist-3D-Modell,
• mindestens ein Soll-3D-Modell,
• mindestens ein Zwischen-Soll-3D-Modell, und
• Arbeitsanweisungen bezüglich einer Bodengestaltung.

11. Fahrzeugsteuersystem nach Anspruch 10,
wobei das mindestens eine Modell geometrische Daten in GNSS-Koordinaten enthält.

12. Verfahren zur mindestens teilweise automatisierten Steuerung eines Fahrzeuges, insbesondere einer Baumaschine, in welchem
• zwei in bekannter Relation zueinander und fix auf dem Fahrzeug (1) positionierte GNSS-Empfänger (3) Signale von Navigationssatelliten (20) empfangen,
• eine Rechnereinheit (4) die Signale fortlaufend zu Richtungsvektoren verwertet,
• ein an einer bekannten Referenz-Position ortsfestes geodätisches Vermessungsgerät (10) exakte Absolutpositionen eines auf dem Fahrzeug (1) in bekannter Relation zu den GNSS-Empfängern (3) positionierten Retroreflektors (2) bestimmt,
• ein Sender (5) des Vermessungsgerätes (10) die exakten Absolutpositionen an die Rechnereinheit (4) übermittelt, und
• die Rechnereinheit (4) in Abhängigkeit der Richtungsvektoren und der exakten Absolutpositionen Befehle für die Lenkung des Fahrzeugs erzeugt.

13. Fahrzeugsteuersystem nach Anspruch 2 oder nach einem der auf Anspruch 2 rückbezogenen Ansprüche 3 bis 12, mit einem auf einem zusätzlichen Fahrzeug anwendbaren und montierbaren Erweiterungssystem, das mindestens aufweist:
• zwei in bekannter Relation zueinander und fix auf einem Fahrzeug (1') positionierte GNSS-Empfänger (3) zum Empfang von Signalen von Navigationssatelliten (20),
• einen Empfänger (6') zum Empfang von Korrekturdaten, und
• eine Rechnereinheit zum Verwerten der Signale zur Bildung von Richtungsvektoren und Positionsdaten und zum Erzeugen von Befehlen an die Lenkung des Fahrzeugs in Abhängigkeit
□ der Richtungsvektoren,
□ der Positionsdaten und
□ der Korrekturdaten.

14. Verwendung von
• zwei in bekannter Relation zueinander und fix auf einem Fahrzeug (1') positionierte GNSS-Empfänger (3) zum Empfang von Signalen von Navigationssatelliten (20),
• einen Empfänger (6') zum Empfang von Korrekturdaten, und
• eine Rechnereinheit zum Verwerten der Signale zur Bildung von Richtungsvektoren und Positionsdaten und zum Erzeugen von Befehlen an die Lenkung des Fahrzeugs in Abhängigkeit
□ der Richtungsvektoren,
□ der Positionsdaten und
□ der Korrekturdaten,
als auf einem zusätzlichen Fahrzeug anwendbaren und montierbaren Erweiterungssystem für ein Fahrzeugsteuersystem nach Anspruch 2 oder nach einem der auf Anspruch 2 rückbezogenen Ansprüche 3 bis 12.

## Claims

1. Vehicle control system, in particular provided for use in construction machines, at least having:
• at least one retro-reflector (2) arranged on a vehicle (1),
• a geodetic measuring device (10) stationarily positioned at a known reference position for determining exact absolute positions of the retro-reflector (2), and
• a computer unit (4) for generating commands for steering the vehicle based on the exact absolute positions, wherein the measuring device (10) has a transmitter (5) for transmitting the exact absolute positions to a receiver (6) of the computer unit (4),
**characterized in that**
• two GNSS receivers (3) for receiving signals from navigational satellites (20) are positioned on the vehicle (2) fixedly and in a known relationship with respect to one another, wherein the retroreflector is arranged on the vehicle (2) in a predefined position with respect to the GNSS receivers (3), and
• the computer unit (4) is configured for using the signals to generate direction vectors and for generating the commands further based on the direction vectors.

2. Vehicle control system according to the preceding claim
Wherein the receiver (6) of the computer unit (4) is configured to forward correction data to receivers (6') of other vehicles, wherein the correction data is generated from the difference between
• position data which is determined with the GNSS receivers (3), and
• the exact absolute positions.

3. Vehicle control system according to any one of the preceding claims, Wherein the computer unit (4) is configured for generating commands for the positioning and/or adjustment of a tool mounted on the vehicle (1).

4. Vehicle control system according to any one of the preceding claims, Wherein the computer unit (4) is configured for generating commands for the positioning and/or adjustment of a material feed device which is mounted on the vehicle (1).

5. Vehicle control system according to any one of the preceding claims, Wherein the computer unit (4) is configured for generating commands for the drivetrain of the vehicle (1).

6. Vehicle control system according to any one of the preceding claims, Wherein the computer unit (4) is configured for generating commands for the brake system of the vehicle (1).

7. Vehicle control system according to any one of the preceding claims, Wherein the geodetic measuring device (10) is configured for continuously determining and transmitting the exact absolute positions.

8. Vehicle control system according to any one of the preceding claims, Wherein the GNSS receivers (3) are jointly positioned on a straight line which
• is parallel to the direction of straight-ahead travel or
• is perpendicular to the direction of straight-ahead travel.

9. Vehicle control system according to any one of the Claims 1 to 7,
Wherein the GNSS receivers (3) are jointly positioned on a straight line which
• is parallel to a vehicle axle or
• perpendicular to a vehicle axle.

10. Vehicle control system according to any one of the preceding claims, wherein the vehicle has at least one tool and/or at least one material feed device, Wherein one or more from the following group are stored in the computer unit (4):
• at least one actual 2-D model,
• at least one actual 3-D model,
• at least one reference 3-D model,
• at least one intermediate reference 3-D model, and
• working commands with respect to ground construction.

11. Vehicle control system according to Claim 10,
Wherein the at least one model comprises geometric data in GNSS coordinates.

12. Method for performing at least partially automated control of a vehicle, in particular of a construction machine, in which method
• two GNSS receivers (3), which are positioned fixedly in a known relationship with respect to one another on the vehicle (1), receive signals from navigation satellites (20),
• a computer unit (4) continuously uses the signals to generate direction vectors,
• a geodetic measuring device (10), which is stationarily positioned at a known reference position, determines exact absolute positions of a retro-reflector (2) which is positioned on the vehicle (1) in a known relationship with respect to the GNSS receivers (3),
• a transmitter (5) of the measuring device (10) transmits the exact absolute positions to the computer unit (4), and
• commands for steering the vehicle are generated by the computer unit (4) based on the direction vectors and the exact absolute positions.

13. Vehicle control system according to Claim 2 or according to any one of Claims 3 to 12 referring back to Claim 2, having an extension system which can be applied to and mounted on an additional vehicle, said extension system having at least:
• two GNSS receivers (3), which are positioned fixedly in a known relationship with respect to one another on a vehicle (1'), for receiving signals from navigation satellites (20),
• a receiver (6') for receiving correction data,
and
• a computer unit for using the signals to generate direction vectors and position data and to generate commands to the steering system of the vehicle based on
□ the direction vectors,
□ the position data, and
□ the correction data.

14. Use of
• two GNSS receivers (3), which are positioned fixedly in a known relationship with respect to one another on a vehicle (1'), for receiving signals from navigation satellites (20),
• a receiver (6') for receiving correction data,
and
• a computer unit for using the signals to generate direction vectors and position data and to generate commands to the steering system of the vehicle based on
□ the direction vectors,
□ the position data, and
□ the correction data,
as an extension system which can be applied to and mounted on an additional vehicle, for a vehicle control system according to Claim 2 or according to any one of Claims 3 to 12 referring back to Claim 2.

## Revendications

1. Système de commande de véhicule, notamment conçu pour être utilisé sur des engins de construction, présentant au moins :
• au moins un rétroréflecteur (2) disposé sur un véhicule (1),
• un appareil de mesure (10) géodésique positionné de manière fixe à une position de référence connue et destiné à déterminer les positions absolues exactes du rétroréflecteur (2), et
• une unité informatique (4) destinée à générer les commandes de direction du véhicule en fonction des positions absolues exactes, l'appareil de mesure (10) présentant un émetteur (5) destiné à communiquer les positions absolues exactes à un récepteur (6) de l'unité informatique (4),
**caractérisé en ce que**
• deux récepteurs GNSS (3) destinés à recevoir des signaux de satellites de navigation (20) sont dans une disposition relative connue et positionnés de manière fixe sur un véhicule (1), le rétroréflecteur (2) étant disposé selon un positionnement prescrit par rapport aux récepteurs GNSS (3) sur le véhicule (1), et
• l'unité informatique (4) est conçue pour exploiter les signaux afin de former des vecteurs directionnels et pour générer les commandes en fonction desdits vecteurs directionnels.

2. Système de commande de véhicule selon l'une des revendications précédentes, dans lequel le récepteur (6) de l'unité informatique (4) est conçu pour transmettre des données correctrices à des récepteurs (6') d'autres véhicules, lesdites données correctrices étant formées à partir de la différence entre
• les données de position obtenues par les récepteurs GNSS (3) et
• les positions absolues exactes.

3. Système de commande de véhicule selon l'une des revendications précédentes, dans lequel l'unité informatique (4) est conçue pour générer des commandes de positionnement et/ou d'ajustement d'un outil monté sur le véhicule (1).

4. Système de commande de véhicule selon l'une des revendications précédentes, dans lequel l'unité informatique (4) est conçue pour générer des commandes de positionnement et/ou d'ajustement d'un dispositif d'apport de matériaux monté sur le véhicule (1).

5. Système de commande de véhicule selon l'une des revendications précédentes, dans lequel l'unité informatique (4) est conçue pour générer des commandes pour l'entraînement du véhicule (1).

6. Système de commande de véhicule selon l'une des revendications précédentes, dans lequel l'unité informatique (4) est conçue pour générer des commandes pour le système de freinage du véhicule (1).

7. Système de commande de véhicule selon l'une des revendications précédentes, dans lequel l'appareil de mesure (10) géodésique est conçu pour déterminer et communiquer en continu les positions absolues exactes.

8. Système de commande de véhicule selon l'une des revendications précédentes, dans lequel les récepteurs GNSS (3) sont positionnés ensemble sur une droite qui est
• parallèle à la direction d'avancement rectiligne du véhicule ou
• perpendiculaire à la direction d'avancement rectiligne du véhicule.

9. Système de commande de véhicule selon l'une des revendications 1 à 7, dans lequel les récepteurs GNSS (3) sont positionnés ensemble sur une droite qui est
• parallèle à un axe du véhicule ou
• perpendiculaire à un axe du véhicule.

10. Système de commande de véhicule selon l'une des revendications précédentes, dans lequel le véhicule présente au moins un outil et/ou un dispositif d'apport de matériaux,
un ou plusieurs éléments de la liste suivante étant enregistrés dans l'unité informatique (4) :
• au moins un modèle 2D réel,
• au moins un modèle 3D réel,
• au moins un modèle 3D théorique,
• au moins un modèle 3D théorique intermédiaire, et
• des instructions de travail concernant un aménagement de terrain.

11. Système de commande de véhicule selon la revendication 10, dans lequel l'au moins un modèle contient des données géométriques en coordonnées GNSS.

12. Procédé de commande au moins partiellement automatisée d'un véhicule, notamment un engin de construction, dans lequel :
• deux récepteurs GNSS (3) dans une disposition relative connue et positionnés de manière fixe sur le véhicule (1) reçoivent des signaux de satellites de navigation (20),
• une unité informatique (4) exploite les signaux en continu pour former des vecteurs directionnels,
• un appareil de mesure (10) géodésique positionné de manière fixe à une position de référence connue détermine des positions absolues exactes d'un rétroréflecteur (2) positionné sur le véhicule (1) dans une disposition relative connue par rapport aux récepteurs GNSS (3),
• un émetteur (5) de l'appareil de mesure (10) communique les positions absolues exactes à l'unité informatique (4), et
• l'unité informatique (4) génère des commandes de direction du véhicule en fonction des vecteurs directionnels et des positions absolues exactes.

13. Système de commande de véhicule selon la revendication 2 ou selon l'une des revendications 3 à 12 dépendant de la revendication 2, comportant un système d'extension pouvant être utilisé et monté sur un véhicule supplémentaire, qui présente au moins :
• deux récepteurs GNSS (3) dans une disposition relative connue et positionnés de manière fixe sur un véhicule (1'), destinés à recevoir des signaux de satellites de navigation (20),
• un récepteur (6') destiné à recevoir des données correctrices, et
• une unité informatique destinée à exploiter les signaux pour former des vecteurs directionnels et des données de position et à générer des commandes pour la direction du véhicule en fonction
□ des vecteurs directionnels,
□ des données de position et
□ des données correctrices.

14. Utilisation de
• deux récepteurs GNSS (3) dans une disposition relative connue et positionnés de manière fixe sur un véhicule (1'), destinés à recevoir des signaux de satellites de navigation (20),
• un récepteur (6') destiné à recevoir des données correctrices, et
• une unité informatique destinée à exploiter les signaux pour former des vecteurs directionnels et des données de position et à générer des commandes pour la direction du véhicule en fonction
□ des vecteurs directionnels,
□ des données de position et
□ des données correctrices,
en tant que système d'extension pouvant être utilisé et monté sur un véhicule supplémentaire, pour un système de commande de véhicule selon la revendication 2 ou selon l'une des revendications 3 à 12 dépendant de la revendication 2.
